# EUROPEAN PATENT SPECIFICATION

(11) **EP 1 710 105 B1**
(45) Date of publication and mention of the grant of the patent: **04.05.2011**
(21) Application number: 05380259.1
(22) Date of filing: 28.11.2005
(51) Int. Cl.: B60J 1/10, B60J 1/00

(54) **Emergency exit window**
Notausstiegfenster
Fenêtre d'issue de secours

(30) Priority: 01.04.2005 ES 200500751
(43) Date of publication of application: 11.10.2006
(73) Proprietor: Industrias E. Diaz, S.A., 50720 La Cartuja (Zaragoza) (ES)
(72) Inventor: Diaz Gascón, Emilio, 50720 La Cartuja Zaragoza (ES)
(74) Representative: Manzano Cantos, Gregorio

(56) References cited:
- EP-A- 1 048 562
- WO-A-99/07600
- DE-A1- 4 009 349
- DE-A1- 10 244 138

## Description

### OBJECT OF THE INVENTION

As indicated by its title, this specification has as an object to provide an emergency window offering an emergency exit in any dangerous situation in the automotive field, essentially in railcars and passenger buses. According to certain dangerous situations, the glass of the window, with or without an incorporated frame, is automatically or manually released, the opening that the window occupied being completely open and unoccupied, thus allowing the exit of the passengers using this automotive means for the purpose of assuring absolute safety in any possible dangerous situation.

### STATE OF THE ART

The known art in emergency exit systems in the automotive field generally consists of manual methods, the most common being the presence of a tool (a hammer) above the window indicated as the emergency window so that by making use of the tool, the passenger makes the glass break or shatter so as to leave the opening unoccupied; there are also punches coupled onto a small box adhered to the glass itself which, when hit, cause the breaking of the glass.

Also to be cited as the background of the invention that is proposed as emergency window opening means are: U.S. patent document 2004/0055218 A1 for a "SAFETY WINDOW" by Isaac Forsyth and Neil Forsyth, and EP 1 101 895 A2 for an "EMERGENCY EXIT COMPRISING A MULTIPLE GLAZED WINDOW" by Pilkington United Kingdom Limited. DE 4 009 349 A1 discloses an emergency window according to the preamble of claim 1.

These systems do not always fulfill their function, their safe operation in the event of an accident being of vital importance, and it is necessary to take into account the chaos arising in an accident and, in addition to the well-known confusion and nervousness, confusion occurs such as the fact that the breaking element is not found in its place, or its operation is unknown, making it impossible to leave the exit space unoccupied or free in such emergencies in the event of serious accidents, which unfortunately do happen; therefore it must be understood that with respect to exit opening security, emergency windows which do not fulfill their function 100% cannot be used.

### DESCRIPTION OF THE INVENTION

The present invention proposed herein is a smart emergency window which completely departs from all that known as the prior art by providing a glass which can have the same features as the rest or the window, which can be automatically or manually released, *in situ* or from a distance, through a device acting on the closure or anchor points fixing the window according to a series of conditions and parameters, such as inclination, deceleration, temperature (fire), derailing or others, the opening occupied by the window being completely unoccupied, the window being released from the vehicle allowing the exit and evacuation of the passengers through said opening.

Associated to this automatic system are other manual processes from both inside and outside the vehicle or automotive means, affirming the full safety of the performance of said device and therefore the confirmation of assurances so that the occupant or user may exit.

As previously stated, the smart emergency window according to the invention consists of immediate acting mechanisms, which can be actuated from inside or from outside the convoy, vehicle, railcar or the like, by any suitable system or apparatus either known or designed especially for this purpose.

### DESCRIPTION OF THE DRAWINGS

To complete the description being made and for the purpose of aiding to better understand the features of the invention, a set of drawings is attached as an integral part thereof in which the following has been depicted with an illustrative and non-limiting character:

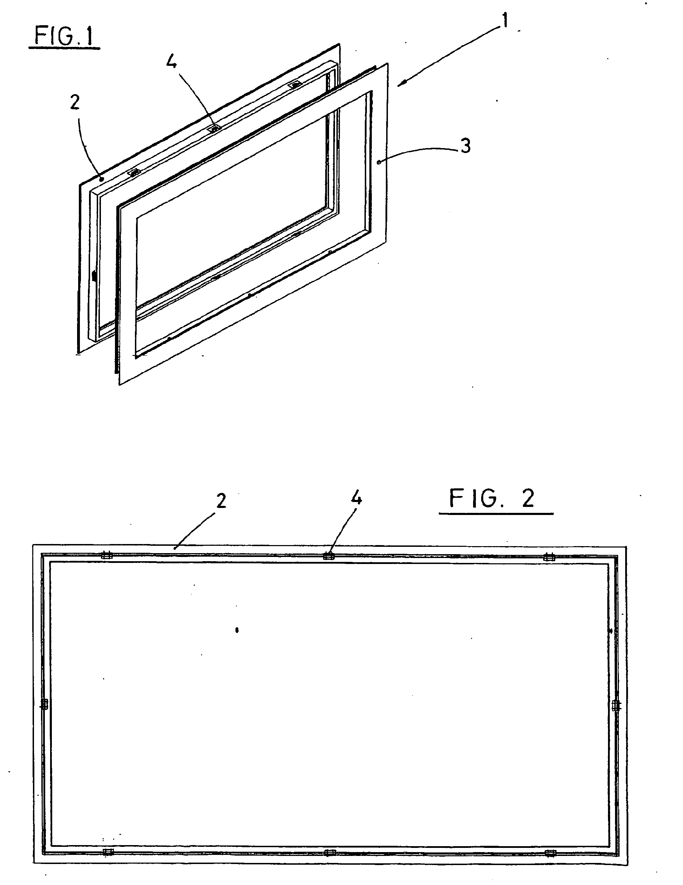

Figure 1 shows a perspective view of the window assembly (1), with the fixed framework (3) and the extractable or ejectable frame (2) which will have its corresponding glass.
Figure 2 shows an internal elevation view of the ejectable frame (2) equipped with fixed closures (4).

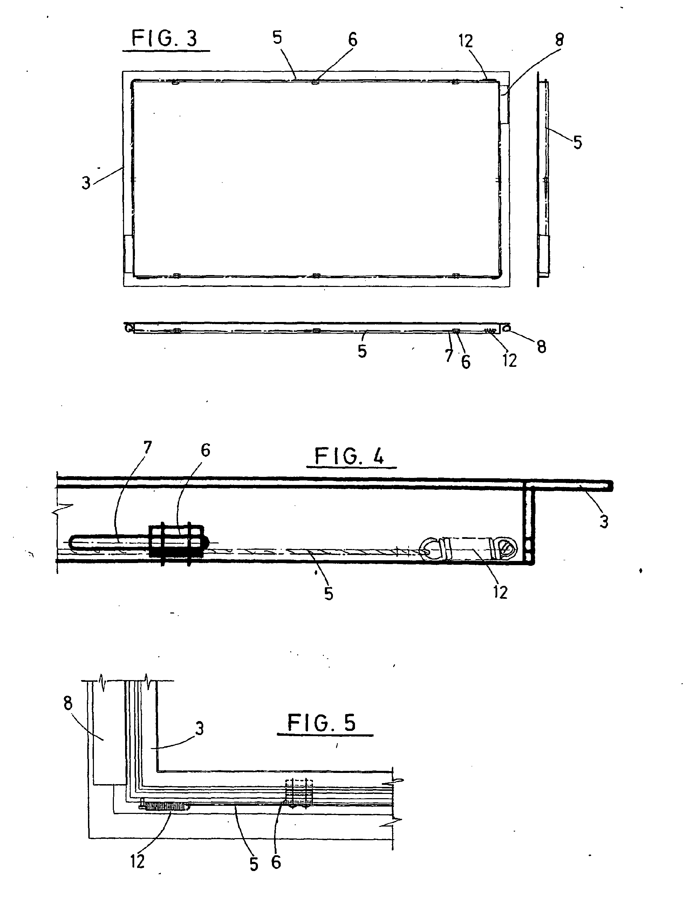

Figure 3 shows internal elevation, profile and plan views of the fixed framework (3) detailing the moving closures (6) assembled in corresponding guide grooves (7) and linked by a flexible joining member (5).
Figure 4 shows a plan view of a detail of the arrangement in its groove (7) of the moving closure (6) and of the safety spring (12) of the closure mechanism.
Figure 5 shows an internal elevation view of a detail of the moving closure (6) attached onto the outer edge of the fixed frame (3), linked by a corresponding flexible joining member (5) equipped with a safety spring (12) assuring the locked situation of the closures in their normal use.

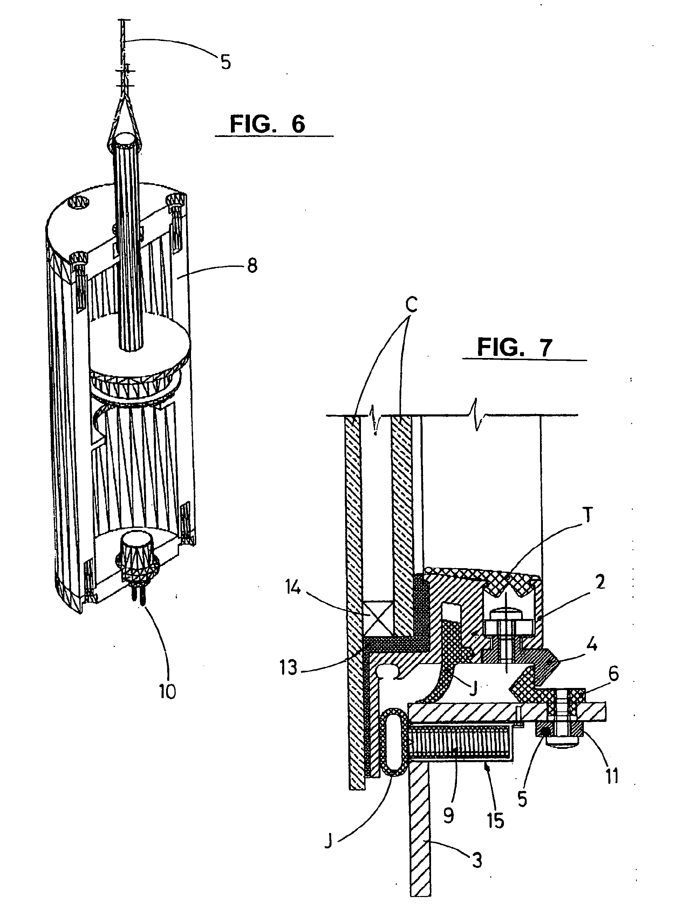

Figure 6 corresponds to a sectional perspective view of a detail of a possible drive member or actuation device (8) solution, having a pyrotechnic initiator (10). Other options considered to be drive members are pneumatic or hydraulic pistons, electrical drives or other suitable drives. Said drive member could be operated automatically according to a series of parameters or manually by people, *in situ* or from a distance for the purpose of causing the release of the extractable frame (2).
Figure 7 shows a section view with the different parts involved in this emergency window assembly in which section (3) belongs to the fixed frame attached on the chassis of the railcar or bus, the sectioned profile (2) corresponds to the extractable frame, joined to the double glass by means of an adhesive member (13), sections (J) represent the gaskets of the window, and finally, the ejection members (9) together with their housings (15) which aid in the release of the extractable frame (2) are observed. The remaining members of the assembly have been described above.

### PREFERRED EMBODIMENT OF THE INVENTION

In view of these figures and numerical references, it can be observed that the smart emergency window (1) assembly basically has two support members assembled reciprocally and securely against one another; an extractable frame (2) and a fixed framework (3), which is fixed on the chassis of the vehicle, bus or railcar and on which the moving closure and centering members are arranged which have the shape of acute, angular clamps which are aligned with other fixed closure parts (4) with the identical preferred acute, angular clamp shape, overlapping one another in a staggered manner in fixed positions on the extractable frame (2), which supports the glass in its different compositions.

This extractable or ejectable frame (2) is released thanks to the action of a drive mechanism with a pyrotechnic, pneumatic, hydraulic, electrical or mechanical effect, or another suitable effect, which is actuated either automatically or manually, the function of which is to cause a movement in the unlocking assembly through a non-deformable joining member (5) constituted by a braided tempered steel cable linking the bases (11) of the moving closures (6) which in turn move guided by grooves (7) located on the outer edge of the fixed framework (3), and for that purpose said grooves (7) have a minimum length so as to remove the moving clamps (6) from the fixed clamps (4) of the extractable frame (2), releasing it and therefore allowing that the ejection members release the extractable frame and glass assembly. The window opens immediately and spontaneously as soon as the unlocking occurs, the opening occupied by the window being completely unoccupied.

The joining member (5) is assured by means of a spring (2) for the purpose of keeping the moving closures (6) in their locking position during normal window operation.

A main advantage of this window is its easy adaptation to the vehicle without requiring the modification of the vehicle for the incorporation of the window; it further contemplates the actuation manually, from inside or outside the vehicle, or automatically from a distance according to a series of parameters such as deceleration, fire, inclination, or others.

## Claims

1. A smart emergency window having automatic or manual drives which, in an accident or emergency situation, actuate and release the fixings of the emergency window once the vehicle has stopped by ejecting it, having a fixed framework (3) integral with the vehicle chassis, having centering and moving closure means (6) coinciding with other fixed aligning closures (4) assembled on the extractable frame (2) supporting the glass (C and C), in which the moving closures are moved by means of a non-deformable joining member (5), cable (5), due to the intervention of an automatic or manual mechanism (8) controlled by means of nearby or remote pyrotechnic, pneumatic, hydraulic or electrical operative means, or other suitable means; in which all the closing, moving and fixed means are **characterized in that** they are fixed clamps (4) and moving clamps (6), having a similar acute angle profile, which in their closed position overlap one another in a staggered manner, safely and securely closing the window, and that said clamps (6) are arranged and guided in respective grooves (7) provided on the outer edge of the fixed framework (3) and linked by means of the non-deformable joining member (5) at the bases (11) located for that purpose under the grooves (7).

2. A smart emergency window according to the previous claim 1, in which the guide and slide grooves of the moving closures are **characterized in that** they have a minimum length to free up the space of the fixed closure clamps (4) when the non-deformable joining member (5) actuates the moving closures (6).

3. A smart emergency window according to previous claim 2, in which the non-deformable joining member (5) is **characterized in that** it is preferably a braided tempered steel cable (5).

4. A smart emergency window according to claims 1 and 2, in which the non-deformable joining member (5) is **characterized by** transmitting the movement of the automatic or manual operating mechanism (8), preferably located at the ends of the cable (5), by transmitting a shifting operation of the moving closures (6), releasing the fixed closures (4) and with them the ejectable frame and glass (2), which is released immediately and spontaneously by means of the pressure of the ejection members (9) housed in their supports (15) .

5. A smart emergency window according to the previous claim 4, in which the non-deformable actuation joining member (5) is **characterized in that** it comprises a safety member (12), specifically a spring, assuring the position of the moving closures (6) in normal operation in the event of vibrations or blows.

## Patentansprüche

1. Intelligentes Notfenster mit automatischen oder manuellen Betätigungen welche, im Notfall oder im Falle eines Unfalls, die Befestigungen des Notfensters betätigen und freigeben, einst das Fahrzeug angehalten hat, wobei dieses ausgestoßen wird, welches einen mit dem Fahrzeugfahrgestell einstückig gebildeten festen Rahmen (3) aufweist, welcher zentrierende und bewegliche Verschlussmittel (6) aufweist, die mit anderen festen Ausrichtungsverschlüssen (4) übereinstimmen, welche an dem das Glas (C und C) abstützenden ausziehbaren Gerüst (2) montiert sind, wobei die bewegliche Verschlüsse mittels einem nicht verformbaren Verbindungselement (5), einem Kabel (5), aufgrund des Eingriffs eines automatischen oder manuellen Mechanismus (8) bewegt werden, welches durch benachbarte oder entfernt liegende pyrotechnische, pneumatische, hydraulische oder elektrische Betriebsmittel, oder andere geeignete Mittel, gesteuert wird; wobei alle verschließende, bewegliche und feste Mittel **dadurch gekennzeichnet sind, dass** sie feste Klemmen (4) und bewegliche Klemmen (6) sind, welche ein ähnliches scharfkantiges Profil aufweisen, die sich in ihrer geschlossenen Position versetzt miteinander überlappen, wobei das Fenster sicher und fest geschlossen wird, und dass die genannten Klemmen (6) in entsprechenden, am äußeren Rand des festen Rahmens (3) vorgesehenen Nuten (7) angeordnet und geführt sind, und welche mittels dem nicht verformbaren Verbindungselement (5) an den dafür unter den Nuten (7) angebrachten Basen (11) verbunden sind.

2. Intelligentes Notfenster nach dem vorhergehenden Anspruch 1, wobei die Führungs- und Gleitnuten der beweglichen Verschlüsse **dadurch gekennzeichnet sind, dass** sie eine minimale Länge aufweisen, um den Raum der festen Verschlussklemmen (4) freizusetzen, wenn das nicht verformbare Verbindungselement (5) die bewegliche Verschlüsse (6) betätigt.

3. Intelligentes Notfenster nach dem vorhergehenden Anspruch 2, wobei das nicht verformbare Verbindungselement (5) **dadurch gekennzeichnet ist, dass** es vorzugsweise ein geflochtenes Kabel (5) aus gehärtetem Stahl ist.

4. Intelligentes Notfenster nach den Ansprüchen 1 und 2, wobei das nicht verformbare Verbindungselement (5) **dadurch gekennzeichnet ist, dass** es die Bewegung von dem automatischen oder manuellen Betriebsmechanismus (8), welches sich vorzugsweise an den Enden des Kabels (5) befindet, überträgt, indem ein Verschiebungsvorgang der beweglichen Verschlüsse (6) übertragen wird, welche die festen Verschlüsse (4) und mit diesen das ausstoßbare Gerüst und das Glas (2) freigeben, welches unmittelbar und spontan mittels dem Druck der Ausstoßelemente (9), die sich in deren Aufnahmen (15) befinden, freigegeben wird.

5. Intelligentes Notfenster nach dem vorhergehenden Anspruch 4, wobei das nicht verformbare betätigende Verbindungselement (5) **dadurch gekennzeichnet ist, dass** es ein Sicherheitselement (12) umfasst, besonders eine Feder, welche die Position der beweglichen Verschlüsse (6) im normalen Betrieb bei Vibrationen oder Stößen gewährleistet.

## Revendications

1. Fenêtre de secours intelligente ayant des commandes automatiques ou manuelles qui, lors d'un accident ou situation d'émergence, s'actionnent et libèrent les fixations de la fenêtre de secours une fois que le véhicule s'est arrêté en l'éjectant, ayant un bâti fixe (3) solidaire du châssis du véhicule, ayant des moyens de fermeture mobiles et de centrage (6) coïncidant avec d'autres dispositifs de fermeture (4) fixes d'alignement assemblés sur l'encadrement extractible (2) qui supporte la vitre (C et C), dans laquelle les dispositifs de fermeture se déplacent au moyen d'un élément d'union non déformable (5), un câble (5) grâce à l'intervention d'un mécanisme (8) automatique ou manuel commandé au moyen de moyens opérationnels pyrotechniques, pneumatiques, hydrauliques ou électriques proches ou à distance, ou d'autres moyens appropriés; dans laquelle tous les moyens de fermeture, mobiles et fixes sont **caractérisés en ce qu'**ils sont des dispositifs de serrage fixes (4) et des dispositifs de serrage mobiles (6), ayant un profil à angle aigu similaire, qui dans leur position fermée se superposent les uns aux autres d'une manière échelonnée, fermant en toute sécurité et de manière fixe la fenêtre, et **en ce que** lesdites dispositifs de serrage (6) sont disposées et guidées dans des rainures respectives (7) prévues sur le bord extérieur de l'encadrement fixe (3) et unis au moyen de l'élément d'union non-déformable (5) aux bases (11) situées à cet effet sous les rainures (7).

2. Fenêtre de secours intelligente selon la revendication 1 précédente, dans laquelle les rainures de guidage et de glissement des dispositifs de fermeture mobiles sont **caractérisés en ce qu'**ils ont une longueur minimale pour libérer l'espace des dispositifs de fermeture (4) fixes lorsque l'élément d'union (5) non-déformable commande les dispositifs de fermeture (6) mobiles.

3. Fenêtre de secours intelligente selon la revendication 2 précédente, dans laquelle l'élément d'union (5) non-déformable est **caractérisé en ce qu'**il est de préférence un câble (5) en acier trempé tressé.

4. Fenêtre de secours intelligente selon les revendications 1 et 2, dans laquelle l'élément d'union (5) non-déformable est **caractérisé par** la transmission du mouvement du mécanisme (8) opérationnel automatique ou manuel, de préférence situé aux extrémités du câble (5), en transmettant un opération de déplacement des dispositifs de fermeture mobiles (6), en libérant les dispositifs de fermeture fixes (4) et avec eux l'encadrement éjectable et la vitre (2), qui est libérée immédiatement et spontanément au moyen de la pression des éléments d'éjection (9) logés dans leurs supports (15).

5. Fenêtre de secours intelligente selon la revendication 4 précédente, dans laquelle l'élément d'union (5) d'actionnement non-déformable est **caractérisé en ce qu'**il comprend un élément de sécurité (12), notamment un ressort, assurant la position des dispositifs de fermeture mobiles (6) lors d'une opération normale en cas de vibrations ou de coups.
